# FASCICULE DE BREVET EUROPEEN

(11) **EP 3 810 491 B1**
(45) Date de publication et mention de la délivrance du brevet: **26.06.2024**
(21) Numéro de dépôt: 19790042.6
(22) Date de dépôt: 17.05.2019
(51) Int. Cl.: B62D 21/15, B62D 25/20

(54) **CHASSIS DE VEHICULE AUTOMOBILE, POURVU D'UNE PIECE PRENANT DES APPUIS ANTAGONISTES CONTRE UNE TRAVERSE ET UN LONGERON EN CAS DE CHOC LATERAL**
KRAFTFAHRZEUGCHASSIS MIT EINEM BAUTEIL, DAS SICH BEI EINEM SEITLICHEN AUFPRALL ANTAGONISTISCH GEGEN EIN SEITENELEMENT UND EINEN LÄNGSTRÄGER ABSTÜTZT
MOTOR VEHICLE CHASSIS PROVIDED WITH A COMPONENT WHICH IS ANTAGONISTICALLY SUPPORTED AGAINST A CROSSMEMBER AND A SIDE MEMBER IN THE EVENT OF LATERAL IMPACT

(30) Priorité: 19.06.2018 FR 1855377
(43) Date de publication de la demande: 28.04.2021
(73) Titulaire: Stellantis Auto SAS, 78300 Poissy (FR)
(72) Inventeur: THOR, Tou, 25150 PONT DE ROIDE VERMONDANS (FR); FONFREDE, Stéphane, 90000 BELFORT (FR)
(86) Numéro de dépôt international: PCT/FR2019/051130
(87) Numéro de publication internationale: WO 2019/243678

(56) Documents cités:
- EP-A1- 0 799 757
- EP-A1- 3 321 152
- DE-A1- 4 335 586
- FR-A1- 3 024 422
- JP-A- 2015 093 633
- US-A1- 2017 210 427

## Description

La présente invention relève du domaine des châssis de véhicules automobiles et plus particulièrement des modalités de leur déformation sous l'effet d'un choc latéral auquel un tel châssis est potentiellement soumis. L'invention concerne plus spécifiquement un aménagement de la jonction entre une traverse et un longeron constitutifs du châssis, participant des modalités de déformation de la traverse sous l'effet d'un choc latéral appliqué contre le longeron.

Les véhicules automobiles comprennent classiquement un châssis qui forme une armature de soubassement du véhicule, comprenant des éléments d'armature longitudinaux, tels que des longerons, qui sont entretoisés par des éléments d'armature transversaux, traverses notamment. Plus particulièrement, le châssis comprend des longerons latéraux bordant respectivement les côtés droit et gauche du châssis en étant entretoisés par des traverses. Un plancher, tel que formé d'un carénage par exemple, est installé sous l'armature de soubassement, en étant fixé au moins aux longerons latéraux et aux traverses.

Au moins un élément d'armature longitudinal annexe, tel qu'un longeron ou un tunnel, peut aussi être interposé à distance transversale entre deux éléments d'armature longitudinaux, notamment les longerons latéraux. Un tel élément d'armature longitudinal est alors potentiellement relié au moins à l'un des longerons latéraux via au moins une traverse, tel que notamment au moins une traverse d'assise soutenant au moins un siège pour les passagers du véhicule.

Dans ce contexte, le châssis comporte des aménagements pour protéger les passagers en cas de choc auquel le véhicule est soumis. De tels aménagements visent essentiellement à contrôler les modalités de déformation des éléments d'armature constitutifs du châssis.

Dans le cadre de l'invention, il est plus spécifiquement considéré une déformation des traverses en cas d'un choc latéral supporté par le châssis, notamment lorsque le véhicule subit un accident contre un obstacle à sa progression qui heurte l'un des longerons latéraux dans sa zone de jonction avec une traverse.

Le choc est alors générateur d'un effort de poussée contre l'extrémité de la traverse fixée au longeron latéral, qui tend à imprimer une déformation de la traverse en compression et/ou en flexion. Il est connu de pourvoir l'extrémité de jonction de la traverse avec le longeron latéral, d'un moyen favorisant une déformation en compression de la traverse pour absorber l'énergie développée par le choc, tel qu'il ressort par exemple du document FR 3 024 422 (PEUGEOT CITROEN AUTOMOBILES). Par ailleurs, le document DE4335586, considéré comme l'état de la technique le plus proche, décrit un châssis de véhicule comportant un longeron latéral relié à une traverse via une pièce intermédiaire.

Dans ce contexte, la présente invention a pour objet un châssis de véhicule automobile comprenant des éléments d'armature longitudinaux, dont des longerons latéraux, et au moins une traverse reliant l'un quelconque des longerons latéraux à un élément d'armature longitudinal du châssis.

L'objectif de l'invention est d'améliorer la sécurité du véhicule en cas de choc latéral appliqué contre le châssis, notamment dans une zone de jonction entre un longeron latéral et une traverse, en limitant une déformation du châssis par suite de l'application dudit choc. Il est plus spécifiquement visé de limiter :
- ) un risque d'intrusion de ladite traverse vers l'habitacle du véhicule par suite de sa déformation, sous l'effet d'un effort de poussée supporté par la traverse et généré par ledit choc latéral, et/ou
- ) une déformation conséquente d'un élément d'armature longitudinal annexe que le châssis est susceptible de comprendre en étant transversalement interposé entre les longerons latéraux, à l'un au moins desquels longerons latéraux ledit élément d'armature longitudinal annexe est susceptible d'être relié par au moins une traverse.

Un autre but de l'invention est de parvenir à l'objectif visé en prenant en compte des contraintes susceptibles de rendre rédhibitoires une solution potentielle. De telles contraintes comprennent notamment :
- ) une limitation du coût d'obtention du véhicule dans le contexte d'une concurrence économique notoirement sévère dans le domaine automobile. Il est notamment visé une solution qui soit structurellement simple et/ou qui évite de complexifier les modalités de montage sur le châssis des organes qu'elle met en oeuvre, et/ou
- ) une limitation de la masse du véhicule.

A titre indicatif non restrictif pour apprécier l'invention et/ou les résultats techniques procurés, il est pris en considération un choc latéral d'une amplitude modérée appliqué contre le châssis, localement suivant une orientation par rapport à la direction longitudinale du châssis comprise dans une marge angulaire d'environ 10° (dix degrés). Il est notamment indiqué d'une part une orientation relative entre la direction longitudinale d'extension du châssis et le sens d'application dudit choc contre le châssis comprise entre environ 70° et 80°, et d'autre part une amplitude du choc latéral considérée pour une progression du véhicule comprise entre environ 30 km/h (trente kilomètres par heure) et 35 km/h.

Il est si besoin précisé certaines notions relatives et/ou termes qui sont communément admis dans le domaine automobile pour décrire un véhicule, ainsi que la caisse qu'il comprend et/ou ses composants.

Les directions d'extension d'un véhicule sont communément définies dans un repère orthonormé identifié suivant une direction longitudinale, une direction transversale et une direction verticale. De telles directions et les notions relatives afférentes sont appliquées par la suite au châssis et/ou à ses composants au regard de leur structure propre et/ou de leurs positions relatives, sauf précision contraire mentionnée.

Les termes longerons ou tunnel désignent des éléments d'armature longitudinaux du châssis. Un tunnel et/ou un longeron peuvent être placés en interposition transversale entre deux longerons latéraux, à l'un au moins desquels longerons latéraux le tunnel est relié par une traverse. La notion latéral qualifiant des longerons est considérée au regard des côtés longitudinaux droit et/ou gauche du châssis par rapport à la position du conducteur du véhicule en station de conduite. Le terme traverse désigne un élément d'armature transversal du châssis interposé suivant son extension principale entre deux éléments d'armature longitudinaux. Les extrémités d'une traverse sont dès lors considérées relativement l'une par rapport à l'autre suivant l'extension principale de la traverse. Une face de bout d'une traverse est ménagée à l'une de ses extrémités en étant concourante à la direction principale d'extension de la traverse.

Les notions inférieur et supérieur, ou autres notions apparentées comme par exemple sous et/ou dessous, sur et/ou dessus, et base et/ou sommet, ou encore surplomb, sont des notions relatives considérées au regard de la notion de verticalité par rapport au plan de roulage au sol du véhicule qui identifie la direction d'extension en élévation du châssis.

Les notions, termes et précisions qui viennent d'être apportées sont dès lors utilisés pour définir l'invention qui sera comprise dans le domaine de l'invention sans avoir nécessairement à les préciser à nouveau.

Les buts visés par la présente invention sont atteints par application des dispositions qui suivent.

Un châssis de véhicule automobile conforme à l'invention comprend des longerons latéraux dont l'un au moins est relié à au moins un élément d'armature longitudinal via une traverse. Une première extrémité de la traverse est fixée à un dit longeron latéral et une deuxième extrémité de la traverse est fixée audit élément d'armature longitudinal.

Dans ce contexte, l'invention est reconnaissable en ce qu'une pièce conjointement fixée au longeron latéral et à la traverse est munie d'un organe d'appui qui est transversalement interposé sur le châssis entre une paroi du longeron et une face de bout de la première extrémité de la traverse. L'organe d'appui prend des appuis transversaux antagonistes contre ladite paroi du longeron et ladite face de bout de la première extrémité de la traverse, sous l'effet d'un choc latéral appliqué contre le longeron. La pièce est fixée sous un plancher équipant le châssis. Le plancher est interposé entre d'une part ladite pièce et d'autre part le longeron et la première extrémité de la traverse.

Il est notamment pris en considération que l'effort de poussée généré par le choc est susceptible d'être diversement orienté dans l'espace euclidien, en développant des composantes d'effort d'amplitudes propres suivant les directions respectives d'extension du châssis. Dans ce contexte, ladite pièce est configurée en un déflecteur d'effort qui permet, via l'organe d'appui, d'optimiser l'amplitude d'une composante d'effort transversale transmise à la traverse par le longeron et issue de l'effort de poussée généré par le choc latéral appliqué contre le longeron.

Ceci a pour résultat de contrôler une déformation de la traverse sous l'effet dudit choc latéral, en limitant sa mise en flexion et en optimisant sa déformation en compression suivant sa direction principale d'extension vers ledit élément d'armature longitudinal auquel la traverse est fixée via sa deuxième extrémité. Une déformation de la traverse en flexion et/ou une déformation aléatoire dudit élément d'armature longitudinal sont ainsi limitées, voire évitées selon l'amplitude et/ou l'orientation du choc latéral appliqué contre le longeron.

Il en ressort que la déformation du châssis qui en résulte se produit essentiellement dans le plan général d'extension du soubassement du véhicule comprenant lesdits éléments d'armature, en étant contrôlée au moins via ladite pièce. Ceci présente finalement l'avantage de sécuriser l'habitacle et donc de préserver les passagers installés sur un siège potentiellement soutenu par la traverse, en cas de choc latéral appliqué contre un longeron latéral dans l'environnement proche de sa jonction avec la traverse.

Ladite paroi du longeron est notamment ménagée par une aile d'extension verticale et longitudinale que comporte le longeron à son extrémité inférieure orientée vers le bas du châssis ou autrement dit vers le plan de roulage du véhicule. Tel que précédemment visé, les notions inférieure et bas sont comprises au regard de l'extension verticale en élévation du châssis.

Selon une forme de réalisation, ladite pièce s'étend transversalement sur le châssis en chevauchement successif sous la première extrémité de la traverse et sous le longeron. Tel que précédemment visé, la notion sous est comprise au regard de l'extension verticale en élévation du châssis.

Une telle position de la pièce sur le châssis permet d'optimiser la mise sous contrainte en compression de la traverse et de limiter sa mise en flexion suivant sa direction principale d'extension. Ceci permet aussi de simplifier la structure de ladite pièce sans affecter ses performances, de simplifier ses modalités de montage sur le châssis et/ou de conforter une jonction robuste de ladite pièce à la traverse et au longeron latéral.

Ainsi selon une forme de réalisation, ladite pièce est avantageusement agencée en une plaque qui s'étend au moins sous la première extrémité de la traverse et qui est munie dudit organe d'appui. L'organe d'appui est ménagé transversalement en débordement de la traverse entre la face de bout de sa première extrémité et ladite paroi du longeron. Il est compris ici que la plaque s'étend dans un plan orienté suivant la direction longitudinale et la direction transversale d'extension du châssis.

Ainsi encore selon une forme de réalisation, ledit organe d'appui est avantageusement formé d'au moins un talon intégré à la plaque et s'étendant en élévation en surplomb du plan d'extension de la plaque. Il est compris ici que le talon s'étend sur le châssis transversalement et longitudinalement suivant le plan de la plaque, et en élévation vers le longeron par rapport au plan de la plaque.

Selon une forme de réalisation, ladite pièce intègre au moins un organe de contrôle de sa déformation favorisant son rabat contre la face de bout de la traverse soumise à compression en cas de choc latéral. Un tel rabat par basculement de ladite pièce permet d'optimiser l'orientation dudit effort de poussée essentiellement suivant ladite composante d'effort transversale appliquée contre la face de bout de la traverse suivant sa direction principale d'extension.

Un tel organe de contrôle est par exemple formé :
- ) d'au moins un bossage ménagé sur la plaque en s'étendant suivant l'extension transversale du châssis, dont l'extension verticale est progressivement diminuée depuis son extrémité fixée à ladite paroi du longeron,
- ) d'au moins un organe de fragilisation dudit au moins un bossage favorisant sa mise en compression sous l'effet du choc, par exemple formé d'un relief et/ou d'une saignée orientés perpendiculairement à sa direction principale d'extension ou autrement dit suivant l'extension longitudinale du châssis, et/ou
- ) d'au moins un organe de fragilisation de la plaque, par exemple formé d'au moins une ouverture à travers son épaisseur.

Ainsi selon une forme de réalisation, ladite pièce comporte en saillie à sa face inférieure au moins un bossage s'étendant transversalement par rapport au châssis. L'extension en élévation dudit bossage diminue progressivement depuis l'organe d'appui suivant l'extension du bossage transversalement par rapport au châssis.

Le bossage permet de conforter la robustesse de ladite pièce et sa résistance à la déformation en phase initiale d'application du dit choc latéral contre le longeron, pour finalement initier l'obtention d'un accroissement de l'amplitude de ladite composante de poussée transversale contre la face de bout de la traverse. La diminution du bossage en élévation permet ensuite d'accroître le contrôle de la déformation de ladite pièce par rabat contre la face de bout de la traverse, par suite de son basculement vertical sous l'effet du choc.

Ainsi encore selon une forme de réalisation, le bossage comporte au moins un relief en creux ménagé à la face inférieure de ladite pièce en s'étendant perpendiculairement à l'extension principale du bossage suivant l'extension longitudinale du châssis.

Ledit au moins un relief favorise une mise en compression du bossage transversalement sur le châssis lors de la déformation de ladite pièce et de la compression de la traverse sous l'effet dudit choc latéral. La mise en compression du bossage favorise une mise en compression de la plaque et par suite favorise le contrôle d'un maintien de l'amplitude optimisée de ladite composante de poussée transversale contre la traverse. Il est à noter que la traverse comporte de préférence des reliefs de fragilisation favorisant sa mise en compression, tel que par exemple des saignées ménagées à la base de la traverse et orientées longitudinalement par rapport au châssis.

Ainsi encore selon une forme de réalisation, la plaque comporte une ouverture ménagée à son travers suivant son épaisseur ou autrement dit traversant la plaque perpendiculairement à son plan d'extension. Ladite déformation par rabat de la pièce contre la face de bout de la traverse en est favorisée.

Il est à noter que les résultats obtenus par l'invention sont au mieux performants dans le cas où la traverse est interposée entre ledit longeron latéral et un dit élément d'armature longitudinal transversalement interposé entre les longerons latéraux du châssis. L'extension de la traverse entre ses extrémités étant limitée, le contrôle de sa déformation par application des modalités prévues par l'invention en est amélioré.

Ainsi selon une forme préférée de réalisation, ledit élément d'armature longitudinal est indifféremment un longeron ou un tunnel transversalement interposé sur le châssis entre les longerons latéraux.

L'invention a aussi pour objet un véhicule automobile équipé d'un châssis conforme à l'invention.

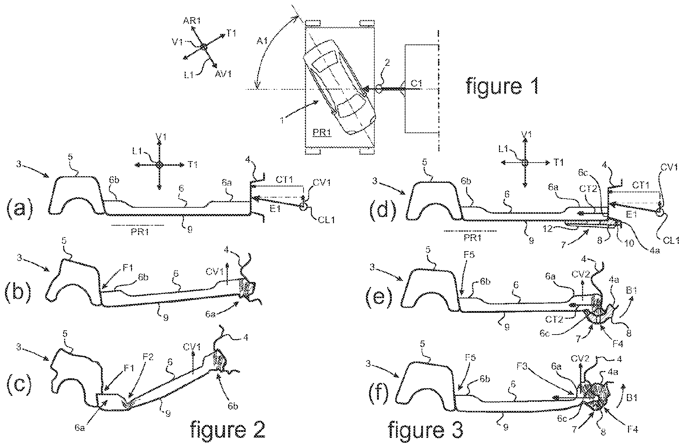

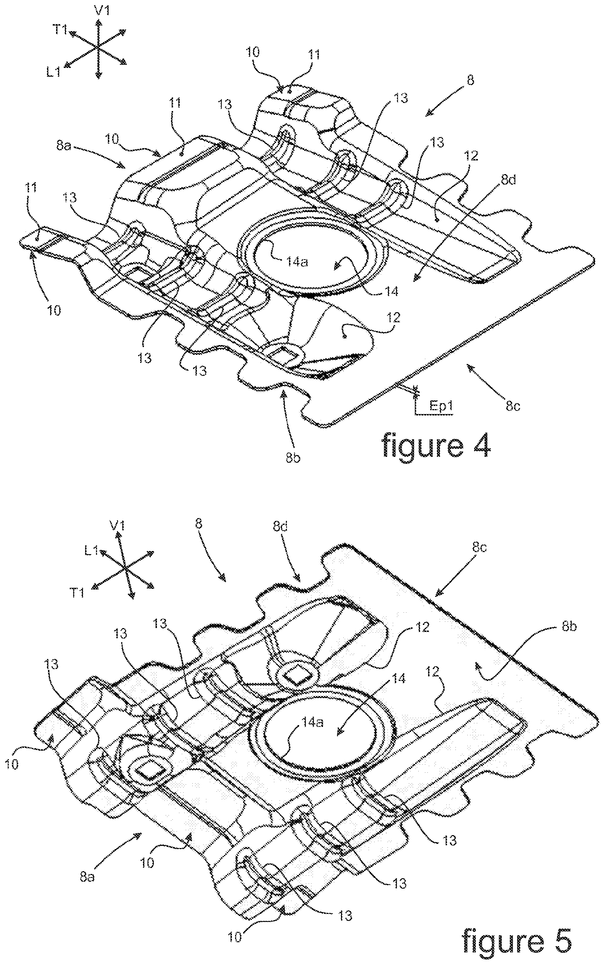

Un exemple de réalisation de la présente invention va être décrit en relation avec les figures des planches annexées, dans lesquelles :
- ) la figure 1 est une illustration présentant, à titre indicatif non limitatif, un contexte d'un choc latéral provoqué contre un châssis d'un véhicule automobile, dans lequel contexte l'invention est notamment prévue d'être appliquée.
- ) la figure 2 est composée de plusieurs schémas (a), (b) et (c) illustrant les modalités classiques de déformation du châssis dans le contexte représenté sur la figure 1, étant compris que sur les schémas de cette figure 2 l'invention est exclue.
- ) la figure 3 est composée de plusieurs schémas (d), (e) et (f) illustrant un exemple de réalisation de l'invention en relation avec les schémas de la figure 1.
- ) les figures 4 et 5 sont des représentations en perspective respectivement de dessus et de dessous d'un exemple de réalisation d'une pièce équipant le châssis conformément à l'invention.

Les figures et leurs descriptions détaillées exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir, si besoin en relation avec la description générale qui vient d'en être faite.

Sur la figure 1, un véhicule 1 automobile s'étend suivant les trois directions d'un repère orthonormé, comprenant typiquement une direction longitudinale L1 d'extension du véhicule 1 entre l'arrière AR1 et l'avant AV1 du véhicule 1, une direction transversale T1 d'extension du véhicule 1 entre ses côtés latéraux et une direction verticale V1 d'extension en élévation du véhicule 1 par rapport à son plan de roulage PR1 au sol.

Sur cette figure, il est illustré des conditions d'application en atelier d'essai d'un choc latéral C1 contre le soubassement du véhicule 1 ménagé par le châssis du véhicule 1. Selon un protocole de test, il est simulé un choc latéral C1 appliqué par un poteau 2 contre le soubassement du véhicule 1, pour une vitesse de progression du véhicule 1 de 32 km/h, le véhicule 1 étant orienté suivant sa direction longitudinale L1 selon un angle A1 d'inclinaison de 75° par rapport à la direction du choc latéral C1 appliqué.

Sur les figures 2 et 3, le châssis 3 d'un véhicule 1 automobile ménage un soubassement du véhicule comprenant des longerons latéraux 4, un seul d'entre eux étant représenté dans le contexte du choc latéral C1 appliqué contre le véhicule 1 illustré sur la figure 1. Le châssis 3 comprend aussi un élément d'armature longitudinal 5 qui est interposé transversalement sur le châssis 3 entre les longerons latéraux 4. Sur l'exemple illustré, ledit élément d'armature longitudinal 5 est formé d'un tunnel. Une traverse 6 relie entre eux le tunnel 5 et le longeron 4. Une première extrémité 6a de la traverse 6 est fixée au longeron 4 et une deuxième extrémité 6b de la traverse 6 est fixée au tunnel 5. La traverse 6 est notamment une traverse 6 d'assise soutenant au moins un siège pour les passagers avant du véhicule.

Sur les schémas (a) et (d), le châssis 3 est soumis audit choc latéral C1 appliqué contre le longeron 4 dans sa zone de jonction avec la traverse 6, comme illustré sur la figure 1. Le choc latéral C1 développe alors un effort de poussée E1 contre le longeron 4. Par suite de l'inclinaison longitudinale du véhicule 1 par rapport à la direction d'application du choc latéral C1, ledit effort de poussée E1 est générateur principalement d'une composante CT1 d'effort transversale, mais aussi au moins d'une composante CL1 d'effort longitudinale, voire potentiellement aussi à moindres mesures d'une composante CV1 d'effort verticale.

Comme illustré sur les schémas (b) et (c) de la figure 2 relevant de l'art antérieur, l'effort de poussée E1 provoque une déformation progressive de la traverse 6. Il est constaté que la traverse 6 subit alors une composante d'effort verticale CV1 significative sous l'effet de sa déformation.

Plus particulièrement sur le schéma (b), la première extrémité 6a de la traverse 6 est dans un premier temps soumise à compression. Par suite des diverses composantes d'effort générées par l'effort de poussée E1, ladite composante d'effort verticale CV1 tend à infléchir F1 la traverse 6 vers l'habitacle du véhicule. Une telle inflexion F1 se produit essentiellement en bout de la deuxième extrémité 6b de jonction de la traverse 6 avec le tunnel 5. La jonction de la traverse 6 au tunnel 5 en est fragilisée et le tunnel 5 se déforme.

Sur le schéma (c), l'amorce de flexion F1 de la traverse 6 illustrée sur le schéma (b), accroît progressivement l'amplitude de la composante d'effort verticale CV1, avec pour effet de provoquer une flexion F2 conséquente de la traverse 6 à sa deuxième extrémité 6b et par suite une déformation significative du tunnel 5. Il en ressort alors un risque d'intrusion de la traverse 6 et/ou du longeron 4 vers l'habitacle du véhicule 1, au détriment de la sécurité des passagers.

Sur les schémas (d) à (f) de la figure 3 relevant de l'invention, le châssis 3 est pourvu d'une pièce 7 permettant de contrôler les modalités de transmission de l'effort de poussée E1 contre la traverse 6 et par suite sa déformation. Ladite pièce 7 permet de stabiliser l'application de l'effort de poussée E1 contre la traverse 6 suivant une composante d'effort transversale CT2. La pièce 7 permet de contrôler un accroissement de l'amplitude de la composante d'effort transversale CT2 appliquée contre la traverse 6 par la pièce 7. Autrement dit, la pièce 7 est un organe directeur de l'application contre la traverse 6 d'une composante d'effort transversale CT2 via ladite pièce 7, dont l'amplitude est accrue par rapport à la composante d'effort transversale CT1 générée par le choc latéral C1 appliqué contre le longeron 4.

Ceci permet de stabiliser la déformation de la traverse 6 en compression en contraignant une mise en flexion F3 de la traverse 6 à sa première extrémité 6a comme illustré sur le schéma (f), ce qui permet d'accroître l'amplitude de la composante d'effort transversale CT2 appliquée contre la traverse 6 par la pièce 7.

Selon l'exemple illustré, la pièce 7 est formée d'une plaque 8 installée sous la première extrémité 6a de la traverse 6 et sous le longeron 4. La pièce 7 est notamment plaquée contre un plancher 9 que comprend le châssis 3, tel que par exemple formé d'un carénage. Le plancher 9 s'étend essentiellement sous le soubassement du véhicule 1 auquel il est fixé, parallèlement au plan de roulage PR1 du véhicule 1, en étant interposé entre d'une part la pièce 7 et d'autre part la traverse 6 et le longeron 4.

La plaque 8 est plus particulièrement installée en chevauchement successif sous la première extrémité 6a de la traverse 6 et sous le longeron 4, en prenant des appuis transversaux antagonistes respectivement contre une paroi 4a du longeron 4 et contre la face de bout 6c de la première extrémité 6a de la traverse 6.

A cet effet, la plaque 8 comporte un organe d'appui 10 qui est transversalement T1 appliqué contre et en interposition entre ladite paroi 4a du longeron 4 et la face de bout 6c de la première extrémité 6a de la traverse 6. Ledit organe d'appui 10 s'étend en saillie verticale depuis le plan de la plaque 8 vers le longeron 4, dont la paroi 4a contre laquelle l'organe d'appui 10 est appliqué est notamment formée d'une aile que comporte le longeron 4 et qui s'étend sur le châssis longitudinalement L1 et verticalement V1. Sous l'effet du choc latéral C1 appliqué contre le longeron 4, ledit organe d'appui 10 prend dès lors des appuis transversaux antagonistes respectivement contre la face de bout 6c de la traverse 6 et contre la paroi 4a du longeron 4.

Sur le schéma (e), la plaque 8 est soumise dans un premier temps à une compression et à un fléchissement F4 sur elle-même sensiblement en zone transversalement T1 médiane. La plaque 8 tend à basculer B1 verticalement autour de sa zone de jonction avec la première extrémité 6a de la traverse 6 et par suite à être rabattue contre la face de bout 6c de la première extrémité 6a de la traverse 6. La plaque 8 forme alors une coque enveloppant la première extrémité 6a de la traverse 6.

Le rabat de la plaque 8 lui confère alors une conformation en coque enveloppant partiellement la première extrémité 6a de la traverse 6 comme illustré sur le schéma (f). Ceci a pour effet de contenir la déformation de la traverse 6 à sa première extrémité 6a qui est alors soumise essentiellement à une compression. La traverse 6 tend à infléchir F5 modérément à sa deuxième extrémité 6b, en conservant une jonction robuste avec le tunnel 5 dont la déformation est alors aussi contenue.

Plus particulièrement sur le schéma (f), le basculement B1 et le rabat de la plaque 8 contre la première extrémité 6a de la traverse 6 place la plaque 8 en application transversale T1 contre la première extrémité 6a de la traverse 6. Le basculement B1 de la plaque 8 favorise l'application par la plaque 8 contre la traverse 6 de ladite composante d'effort transversale CT2 et d'une composante d'effort verticale CV2 significative provoquant un fléchissement F3 de la traverse 6 à sa première extrémité 6a, et donc hors champ d'intrusion de la traverse 6 vers l'habitacle du véhicule 1.

L'inflexion F5 modérée de la traverse 6 initiée précédemment à sa deuxième extrémité 6b comme illustré sur le schéma (e), est alors significativement contenue. Ceci a pour effet de maintenir une jonction robuste entre la traverse 6 et le tunnel 5, et ainsi de limiter significativement une déformation du tunnel 5.

Sur les figures 4 et 5, le référentiel orthonormé L1, T1, V1 précédemment défini est utilisé pour définir les directions d'extension de la plaque 8 et/ou de ses composants par rapport au châssis 3, en station d'installation de la plaque 8 sur le châssis 3. La plaque 8 comporte ledit organe d'appui 10 qui est composé de talons 11 qui sont ménagés à la première extrémité 8a de jonction de la plaque 8 au longeron 4 en étant transversalement répartis sur la plaque 8 à laquelle ils sont intégrés en étant issus de sa matière.

La plaque comporte divers organes 12, 13, 14 de contrôle de sa déformation provoquée sous l'effet du choc latéral C1, dont des bossages 12 munis de reliefs 13 de fragilisation, et un organe de fragilisation 14 de la plaque 8.

Les bossages 12 s'étendent transversalement T1 sur le châssis, en saillie verticale à la face inférieure 8b de la plaque 8 qui est prévue d'être orientée vers le plan de roulage PR1 du véhicule 1. Les bossages 12, au nombre de deux sur l'exemple illustré, sont longitudinalement L1 distants l'un de l'autre et sont ménagés en bordure des bords de la plaque 8 orientés transversalement T1. Les bossages 12 forment des renforts de la plaque 8 à l'encontre d'une composante d'effort longitudinale développée par le choc latéral C1. La configuration des bossages 12 favorise la mise en conformation de la plaque 8 en coque sous l'effet du choc latéral C1, comme illustré sur les schémas (e) et (f) de la figure 3, ou autrement dit une déformation de la plaque 8 en compression et en flexion F4 vers la face de bout 6c de la première extrémité 6a de la traverse 6.

L'extension verticale V1 des bossages 12 diminue progressivement depuis l'extrémité 8a de jonction de la plaque 8 au longeron 4, via ledit organe d'appui 10, vers son extrémité 8c transversalement T1 opposée qui est appliquée contre la traverse 6 à sa face inférieure, via le plancher 9. Les bossages 12 présentent ainsi une conformation effilée suivant leur extension transversale T1, verticalement V1 depuis l'extrémité 8a de jonction de la plaque 8 au longeron 4 vers sa dite extrémité 8c transversalement T1 opposée.

En outre, les bossages 12 comportent des reliefs de fragilisation 13 longitudinalement L1 étendus en étant transversalement T1 répartis sur les bossages 12. Les reliefs de fragilisation 13 sont contenus à l'intérieur du volume délimité par les bossages 12, en étant ménagés en saillie verticale vers la face supérieure 8d de la plaque 8, via laquelle la plaque 8 est appliquée contre la première extrémité 6a de la traverse 6 et au longeron 4 via le plancher 9. Selon l'exemple illustré, lesdits reliefs de fragilisation 13 sont formés d'empreintes ménagées sur les bossages 12. D'autres agencements des reliefs de fragilisation 13 peuvent être utilisés, comme par exemple des saignées ménagées dans la paroi de la plaque 8 dont sont issus les bossages 12.

Ledit organe de fragilisation 14 de la plaque 8 est ménagé longitudinalement L1 entre les bossages 12, en zone transversalement T1 médiane de la plaque 8. Selon l'exemple illustré, l'organe de fragilisation 14 est formé d'une ouverture 14a circulaire qui est ménagée à travers l'épaisseur Ep1 la plaque 8, perpendiculairement à son plan, en débouchant aux faces inférieure 8b et supérieure 8d de la plaque 8. L'organe de fragilisation 14 de la plaque 8 favorise aussi, isolément ou en combinaison avec les reliefs de fragilisation 13 dont sont munis les bossages 12, la mise en conformation de la plaque 8 en coque sous l'effet du choc latéral C1, comme illustré sur les schémas (e) et (f) de la figure 3, ou autrement dit la déformation de la plaque 8 en compression et en flexion F4 par suite de son basculement B1.

## Revendications

1. Châssis (3) de véhicule (1) automobile comprenant des longerons latéraux (4) dont l'un au moins est relié à au moins un élément d'armature longitudinal (5) via une traverse (6) dont une première extrémité (6a) est fixée à un dit longeron latéral (4) et dont une deuxième extrémité (6b) est fixée audit élément d'armature longitudinal (5), et une pièce (7) conjointement fixée au longeron latéral (4) et à la traverse (6) est munie d'un organe d'appui (10) qui est transversalement (T1) interposé sur le châssis (3) entre une paroi (4a) du longeron (4) et une face de bout (6c) de la première extrémité (6a) de la traverse (6), contre lesquelles ledit organe d'appui (10) prend des appuis transversaux (T1) antagonistes sous l'effet d'un choc latéral (C1) appliqué contre le longeron (4), ladite pièce (7) étant fixée sous un plancher (9) équipant le châssis (3), **caractérisé en ce que** le plancher (9) est interposé entre d'une part ladite pièce (7) et d'autre part le longeron (4) et la première extrémité (6a) de la traverse (6).

2. Châssis (3) selon la revendication 1, **caractérisé en ce que** ladite pièce (7) s'étend transversalement (T1) sur le châssis (3) en chevauchement successif sous la première extrémité (6a) de la traverse (6) et sous le longeron (4).

3. Châssis (3) selon l'une quelconque des revendications 1 et 2, **caractérisé en ce que** ladite pièce (7) est agencée en une plaque (8) qui s'étend au moins sous la première extrémité (6a) de la traverse (6) et qui est munie dudit organe d'appui (10) ménagé transversalement (T1) en débordement de la traverse (6) entre la face de bout (6c) de sa première extrémité (6a) et ladite paroi (4a) du longeron (4).

4. Châssis (3) selon la revendication 3, **caractérisé en ce que** ledit organe d'appui (10) est formé d'au moins un talon (11) intégré à la plaque (8) et s'étendant en élévation (V1) en surplomb du plan d'extension de la plaque (8).

5. Châssis (3) selon l'une quelconque des revendications 1 à 4, **caractérisé en ce que** ladite pièce (7) comporte en saillie à sa face inférieure (8b) au moins un bossage (12) s'étendant transversalement (T1) par rapport au châssis (3), l'extension en élévation (V1) dudit bossage (12) diminuant progressivement depuis l'organe d'appui (10) suivant l'extension du bossage (12) transversalement (T1) par rapport au châssis (3).

6. Châssis (3) selon la revendication 5, **caractérisé en ce que** le bossage (12) comporte au moins un relief (13) en creux ménagé à la face inférieure (8b) de ladite pièce (7) en s'étendant perpendiculairement à l'extension principale du bossage (12) suivant l'extension longitudinale (L1) du châssis (3).

7. Châssis (3) selon la revendication 3 et l'une quelconque des revendications 4 à 6, **caractérisé en ce que** la plaque (8) comporte une ouverture (14) ménagée à son travers suivant son épaisseur (Ep1).

8. Châssis (3) selon l'une quelconque des revendications 1 à 7, **caractérisé en ce que** ledit élément d'armature longitudinal (5) est indifféremment un longeron ou un tunnel transversalement interposé sur le châssis (3) entre les longerons latéraux (4).

9. Véhicule (1) automobile, **caractérisé en ce qu'**il est équipé d'un châssis (3) selon l'une quelconque des revendications 1 à 8.

## Patentansprüche

1. Fahrzeugrahmen (3) mit Seitenholmen (4), von denen mindestens eines mit mindestens einem Längsbewehrungselement (5) über einen Querträger (6) verbunden ist, dessen erstes Ende (6a) an einem Seitenholm (4) befestigt ist und dessen zweites Ende (6b) an dem Längsbewehrungselement (5) befestigt ist, und ein Längsteil (7), das mit dem Längsträger verbunden ist Der Seitenkeim (4) und der Querträger (6) ist mit einem Stützelement (10) versehen, das quer (T1) auf dem Rahmen (3) zwischen einer Wand (4a) des Längsträgers (4) und einer Stirnfläche (6c) des ersten Endes (6a) des Querträgers (6) angeordnet ist, gegen die das Stützelement (10) Querstützen (1) angreift. T1) Antagonisten, die unter dem Einfluss eines seitlichen Aufpralls (C1) auf den Längsträger (4) wirken, wobei das Teil (7) unter einem Boden (9) befestigt ist, der das Chassis (3) umfasst, **dadurch gekennzeichnet, dass** der Boden (9) zwischen dem Teil (7) und dem Längsträger (4) und dem ersten Ende (6a) des Querträgers (6) angeordnet ist ...

2. Chassis (3) nach Anspruch 1, **dadurch gekennzeichnet, dass** sich das Teil (7) quer (T1) über das Chassis (3) erstreckt und sich sukzessive überlappend unter dem ersten Ende (6a) des Querträgers (6) und unter dem Längsträger (4) erstreckt.

3. Chassis (3) nach einem der Ansprüche 1 und 2, **dadurch gekennzeichnet, dass** das Teil (7) als eine Platte (8) ausgebildet ist, die sich zumindest unter dem ersten Ende (6a) des Querträgers (6) erstreckt und mit dem Stützelement (10) versehen ist, das in Querrichtung (T1) angeordnet ist, das über den Querträger (6) zwischen der Stirnfläche (6c) seines ersten Querträgers hinausragt Ende (6a) und Wand (4a) des Längsträgers (4).

4. Rahmen (3) nach Anspruch 3, **dadurch gekennzeichnet, dass** das Stützelement (10) aus mindestens einem Absatz (11) gebildet ist, der in die Platte (8) integriert ist und sich in einer Erhöhung (V1) über der Ebene der Erstreckung der Platte (8) erstreckt.

5. Chassis (3) nach einem der Ansprüche 1 bis 4, **dadurch gekennzeichnet, dass** das Teil (7) an seiner Unterseite (8b) mindestens einen sich quer zum Chassis (3) erstreckenden Vorsprung (12) aufweist, wobei der Vorsprung (V1) des Vorsprungs (12) von dem Stützelement (10) allmählich abnimmt nach der Ausdehnung des Vorsprungs (12) quer (T1) zum Rahmen (3).

6. Rahmen (3) nach Anspruch 5, **dadurch gekennzeichnet, dass** der Vorsprung (12) mindestens eine vertiefte Erhebung (13) aufweist, die an der Unterseite (8b) des Teils (7) ausgebildet ist, wobei sie sich senkrecht zur Haupterstreckung des Vorsprungs (12) entlang der Längserstreckung (L1) des Rahmens (3) erstreckt.

7. Rahmen (3) nach Anspruch 3 und einem der Ansprüche 4 bis 6, **dadurch gekennzeichnet, dass** die Platte (8) eine Öffnung (14) aufweist, die durch sie hindurch in ihrer Dicke (Ep1) ausgebildet ist.

8. Chassis (3) nach einem der Ansprüche 1 bis 7, **dadurch gekennzeichnet, dass** das Längsbewehrungselement (5) als Längsträger oder Tunnel zwischen den Seitenholmen (4) quer am Chassis (3) angeordnet ist.

9. Kraftfahrzeug (1), **dadurch gekennzeichnet, dass** es mit einem Rahmen (3) nach einem der Ansprüche 1 bis 8 ausgestattet ist.

## Claims

1. Motor vehicle chassis (3) (1) consisting of lateral lengths (4), at least one of which is connected to at least one longitudinal reinforcement element (5) through a crossbow (6) with a first extremity (6a) attached to a said lateral longeron (4) and with a second extremity (6b) attached to that longitudinal reinforcement element (5), and a part (7) jointly attached to the side bar (4) and to the crossbar (6) is equipped with a support unit (10) which is transversely (T1) interposed on the chassis (3) between a wall (4a) of the longeron (4) and a end face (6c) of the first end (6a) of the crossbar (6), against which the support unit (10) takes transverse supports (T1) antagonistic as a result of a lateral shock (C1) applied against the longeron (4), the said part (7) being fixed under a floor (9) fitted to the chassis (3), characterized that the floor (9) is interposed between the said part (7) and the longeron (4) and the first end (6a) of the cross (6)

2. Chassis (3) according to Claim 1, **characterized in that** the said part (7) extends transversely (T1) on the successive chassis (3) overlapping under the first end (6a) of the cross (6) and under the spar (4).

3. Chassis (3) in accordance with any of Claims 1 and 2, **characterized by** the fact that that part (7) is arranged into a plate (8) that extends at least under the first end (6a) of the cross (6) and that is equipped with the said supporting organ (10) arranged horizontally (T1) at the overflow of the cross (6) between the end face (6c) of its first end (6a) and said wall (4a) of the longeron (4).

4. Chassis (3) according to Claim 3, **characterized in that** said support organ (10) is composed of at least one heel (11) integrated with the plate (8) and extending in elevation (V1) above the plane of extension of the plate (8).

5. Chassis (3) according to any of the claims 1 to 4, **characterized by** that part (7) protruding to its lower face (8b) at least one boss (12) extending horizontally (T1) to the chassis (3), with the extension in elevation (V1) of the said boss (12) gradually decreasing from the supporting body (10)) following the extension of the boss (12) transversely (T1) in relation to the chassis (3).

6. Chassis (3) according to claim 5, characterized that the bossage (12) has at least one relief (13) in a hollow at the lower face (8b) of that part (7) extending perpendicular to the main extension of the bossing (12) following the longitudinal extension (L1) of the chassis (3).

7. Chassis (3) according to Claim 3 and any of Claims 4 to 6, characterized as plate (8) has an opening (14) arranged through its thickness (Ep1).

8. Chassis (3) according to any of the claims 1 to 7, characterized as the said longitudinal reinforcement element (5) is indifferently a longeron or a cross-strung tunnel interposed on the chassis (3) between the lateral lengths (4).

9. Motor vehicle (1), **characterized in that** it is equipped with a chassis (3) according to any of the claims 1 to 8.
